# EUROPEAN PATENT APPLICATION

(11) **EP 4 745 628 A1**
(43) Date of publication of application: **20.05.2026**
(21) Application number: 24839392.8
(22) Date of filing: 12.06.2024
(51) Int. Cl.: G01T 1/17, G01T 1/24

(54) **RADIATION DETECTION DEVICE AND SIGNAL PROCESSING METHOD**

(30) Priority: 11.07.2023 JP 2023113882
(71) Applicant: HORIBA, Ltd., Minami-ku Kyoto-shi Kyoto 601-8510 (JP)
(72) Inventor: MATSUNAGA, Daisuke, Kyoto-shi, Kyoto 601-8510 (JP); MURATA, Shunsuke, Kyoto-shi, Kyoto 601-8510 (JP); OHASHI, Satoshi, Kyoto-shi, Kyoto 601-8510 (JP); VALIEV, Ildar, Kyoto-shi, Kyoto 601-8510 (JP); AOYAMA, Tomoki, Kyoto-shi, Kyoto 601-8510 (JP); OKUBO, Yuji, Kyoto-shi, Kyoto 601-8510 (JP)
(74) Representative: Isarpatent
(86) International application number: PCT/JP2024/021278
(87) International publication number: WO 2025/013496

(57) **Abstract**

There are provided a radiation detection device and a signal processing method capable of preventing damage to a radiation detector.

The radiation detection device includes: a radiation detector that outputs a signal in response to incidence of radiation or light; and a stop processing unit that determines whether or not excessive radiation or excessive light has been incident on the radiation detector based on the signal output from the radiation detector and stops an operation of the radiation detector or stops generation of radiation or light when it is determined that excessive radiation or excessive light has been incident on the radiation detector.

## Description

### Technical Field

The present invention relates to a radiation detection device and a signal processing method.

### Background Art

Radiation such as X-rays is emitted onto a sample, and radiation such as fluorescent X-rays generated from the sample is detected, and the sample is analyzed based on the radiation detection results. In a radiation detection device, radiation such as characteristic X-rays is incident on a radiation detector, the radiation detector outputs a signal corresponding to the radiation, and analysis is performed by signal processing based on the signal. Patent Literature 1 discloses an example of signal processing performed by a radiation detection device.

### Citation List

### Patent Literature:

Patent Literature 1: Japanese Patent Application Laid-Open No. 2023-26203

### Summary

### Technical Problems

In a radiation detection device in which a radiation source and a radiation detector face each other, when radiation detection is performed in the absence of a sample, radiation that should be emitted onto the sample may be incident on the radiation detector. When the sample is thin, radiation transmitted through the sample may be incident on the radiation detector. In a radiation detection device in which a radiation source and a radiation detector do not face each other, radiation may be directly incident on the radiation detector from the radiation source. In these cases, excessive radiation is incident on the radiation detector, causing damage to the radiation detector. Alternatively, the radiation detector may also be damaged when strong light, such as illumination light, light incident from outside the radiation detection device, light from an indicator inside the radiation detection device, or light from an LED (light-emitting diode) or a photointerrupter on the substrate, is incident on the radiation detector.

The present invention has been made in view of the above circumstances, and an object of the present invention is to provide a radiation detection device and a signal processing method that can prevent damage to the radiation detector.

### Solution to Problems

A radiation detection device according to one aspect of the present invention is characterized by comprising: a radiation detector that outputs a signal in response to incidence of radiation or light; and a stop processing unit that determines whether or not excessive radiation or excessive light has been incident on the radiation detector based on the signal output from the radiation detector and stops an operation of the radiation detector or stops generation of radiation or light when it is determined that excessive radiation or excessive light has been incident on the radiation detector.

According to one aspect of the present invention, the stop processing unit determines that excessive radiation or excessive light has been incident on the radiation detector, and stops the operation of the radiation detector or stops the generation of radiation or light. When excessive radiation or excessive light is incident on the radiation detector, the operation of the radiation detector is stopped to prevent damage to the radiation detector. Alternatively, when excessive radiation or excessive light is incident on the radiation detector, the generation of radiation or light is stopped. Therefore, the incidence of excessive radiation or excessive light on the radiation detector is stopped, and damage to the radiation detector is prevented.

In the radiation detection device according to one aspect of the present invention, it is characterized in that the stop processing unit determines that excessive radiation or excessive light has been incident on the radiation detector when a value of the signal output from the radiation detector exceeds a predetermined first threshold value or when a rate of increase in the value of the signal with respect to time exceeds a predetermined second threshold value.

According to one aspect of the present invention, the stop processing unit determines that excessive radiation or excessive light has been incident on the radiation detector when the value of the signal output from the radiation detector exceeds a predetermined first threshold value. Alternatively, the stop processing unit determines that excessive radiation or excessive light has been incident on the radiation detector when the rate of increase in the signal value exceeds a predetermined second threshold value. When excessive radiation or excessive light is incident on the radiation detector, the signal output from the radiation detector increases abruptly. Therefore, by comparing the signal value or the rate of increase in the signal value with a threshold value, it is possible to determine whether or not excessive radiation or excessive light has been incident on the radiation detector.

In the radiation detection device according to one aspect of the present invention, it is characterized in that the stop processing unit determines whether or not excessive radiation or excessive light has been incident on the radiation detector by comparing the value of the signal after A/D (analog/digital) conversion with the first threshold value or by comparing the rate of increase of the signal after A/D conversion with respect to time with the second threshold value.

According to one aspect of the present invention, the stop processing unit compares the value of the signal after A/D conversion with the first threshold value, or compares the rate of increase of the signal after A/D conversion with the second threshold value. By digital processing, it is determined whether or not excessive radiation or excessive light has been incident on the radiation detector.

In the radiation detection device according to one aspect of the present invention, it is characterized in that the stop processing unit is an analog circuit, and the stop processing unit determines whether or not excessive radiation or excessive light has been incident on the radiation detector by comparing the value of the signal with the first threshold value or by comparing the rate of increase of the signal with respect to time with the second threshold value.

According to one aspect of the present invention, the stop processing unit compares the value of the signal with the first threshold value or compares the rate of increase of the signal with the second threshold value by analog processing. Through analog processing, the processing for preventing damage to the radiation detector is performed at high speed.

A radiation detection device according to one aspect of the present invention is characterized by comprising: a radiation detector that outputs a signal in response to incidence of radiation or light; and a stop processing unit that stops the operation of the radiation detector or stops the generation of radiation or light when a value of the signal output from the radiation detector exceeds a predetermined first threshold value or when a rate of increase in the value of the signal with respect to time exceeds a predetermined second threshold value.

According to one aspect of the present invention, the stop processing unit stops the operation of the radiation detector or stops the generation of radiation or light when the value of the signal output from the radiation detector exceeds the first threshold value or when the rate of increase in the signal value exceeds the second threshold value. When radiation or light is incident on the radiation detector such that the signal value exceeds the first threshold value or the rate of increase in the signal value exceeds the second threshold value, the operation of the radiation detector is stopped or the incidence of radiation or light on the radiation detector is stopped.

In the radiation detection device according to one aspect of the present invention, it is characterized in that the radiation detector includes a radiation detection element that outputs a signal in response to incidence of radiation or light and a preamplifier that converts the signal output from the radiation detection element, the radiation detection device further comprises a power supply unit that supplies power for operating the preamplifier to the preamplifier, and the stop processing unit stops the operation of the radiation detector by causing the power supply unit to stop supplying power to the preamplifier.

According to one aspect of the present invention, the stop processing unit stops supplying power to the preamplifier that converts the signal output from the radiation detection element. Therefore, the preamplifier is stopped, and the operation of the radiation detector is stopped.

In the radiation detection device according to one aspect of the present invention, it is characterized in that the radiation detector includes a radiation detection element, the radiation detection device further comprises a voltage application unit that applies a voltage for operating the radiation detection element to the radiation detection element, and the stop processing unit stops the operation of the radiation detector by causing the voltage application unit to stop applying a voltage to the radiation detection element.

According to one aspect of the present invention, the stop processing unit stops applying a voltage for operating the radiation detection element. Therefore, the radiation detection element stops its operation for radiation detection, and the operation of the radiation detector is stopped.

The radiation detection device according to one aspect of the present invention is characterized by further comprising: an irradiation unit that irradiates a sample with radiation, wherein the radiation detector is arranged so as to detect radiation generated from the sample irradiated with radiation, and the stop processing unit stops the generation of radiation by stopping an operation of the irradiation unit.

According to one aspect of the present invention, the stop processing unit stops the operation of the irradiation unit for irradiating the sample with radiation. Therefore, the generation of radiation by the irradiation unit is stopped, and the incidence of radiation on the radiation detector from the irradiation unit is stopped.

The radiation detection device according to one aspect of the present invention is characterized by further comprising: a light-emitting unit, wherein the stop processing unit stops the generation of light by stopping an operation of the light-emitting unit.

According to one aspect of the present invention, the stop processing unit stops the operation of the light-emitting unit for illuminating the sample. Therefore, the generation of light by the irradiation unit is stopped, and the incidence of light on the radiation detector from the light-emitting unit is stopped.

In the radiation detection device according to one aspect of the present invention, it is characterized in that the radiation detector includes: a radiation detection element that outputs a signal in response to incidence of radiation or light; a preamplifier that converts the signal output from the radiation detection element; and an overvoltage protection circuit that prevents a potential of an input terminal of the preamplifier from falling below a ground potential and prevents an absolute value of a potential difference between the potential of the input terminal of the preamplifier and the ground potential from exceeding a predetermined limit voltage.

According to one aspect of the present invention, the overvoltage protection circuit is provided between the radiation detection element and the preamplifier of the radiation detector. This prevents the potential of the input terminal of the preamplifier from falling significantly below the ground potential to cause an overvoltage, and damage to the radiation detector is prevented.

A signal processing method according to one aspect of the present invention is characterized by comprising: determining whether or not excessive radiation or excessive light has been incident on a radiation detector based on a signal output from the radiation detector in response to incidence of radiation or light; and stopping an operation of the radiation detector or stopping generation of radiation or light when it is determined that excessive radiation or excessive light has been incident on the radiation detector.

According to one aspect of the present invention, it is determined that excessive radiation or excessive light has been incident on the radiation detector based on the signal output from the radiation detector, and the operation of the radiation detector is stopped or the generation of radiation or light is stopped. When excessive radiation or excessive light is incident on the radiation detector, the operation of the radiation detector is stopped. Alternatively, when excessive radiation or excessive light is incident on the radiation detector, the generation of radiation or light is stopped. Therefore, damage to the radiation detector is prevented.

### Advantageous Effects of Invention

According to the present invention, excellent effects are achieved, such as preventing damage to the radiation detector when excessive radiation is incident on the radiation detector.

### Brief Description of Drawings

FIG. 1 is a block diagram showing an example of the functional configuration of a radiation detection device according to Embodiment 1.
FIG. 2 is a block diagram showing the functional configuration of a radiation detector 1 and a reset unit and a signal processing unit according to Embodiment 1.
FIG. 3 is a schematic graph showing an example of a signal including a staircase wave.
FIG. 4 is a schematic graph showing an example of a signal output from a radiation detector when excessive radiation is incident.
FIG. 5 is a block diagram showing the functional configuration of a radiation detector and a reset unit and a signal processing unit according to Embodiment 2.
FIG. 6 is a schematic graph showing an example of a differential value of a signal output from a radiation detector when excessive radiation is incident.
FIG. 7 is a block diagram showing the functional configuration of a radiation detector and a reset unit and a signal processing unit according to Embodiment 3.
FIG. 8 is a block diagram showing the functional configuration of a radiation detector and a reset unit and a signal processing unit according to Embodiment 4.
FIG. 9 is a block diagram showing the functional configuration of a radiation detector and a reset unit and a signal processing unit according to Embodiment 5.
FIG. 10 is a flowchart showing a first example of the procedure of information processing executed by a stop processing unit according to Embodiment 5.
FIG. 11 is a flowchart showing a second example of the procedure of information processing executed by the stop processing unit according to Embodiment 5.
FIG. 12 is a block diagram showing the functional configuration of a radiation detector and a reset unit and a signal processing unit according to Embodiment 6.
FIG. 13 is a block diagram showing the functional configuration of a radiation detector and a reset unit and a signal processing unit according to Embodiment 6.
FIG. 14 is a block diagram showing an example of the functional configuration of a radiation detection device according to Embodiment 8.
FIG. 15 is a block diagram showing the functional configuration of a radiation detector and a reset unit and a signal processing unit according to Embodiment 8.
FIG. 16 is a block diagram showing the functional configuration of a radiation detector and a reset unit and a signal processing unit according to Embodiment 9.
FIG. 17 is a block diagram showing the functional configuration of a radiation detector according to Embodiment 10.

### Description of Embodiments

Hereinafter, the present invention will be specifically described with reference to the diagrams showing embodiments thereof.

### <Embodiment 1>

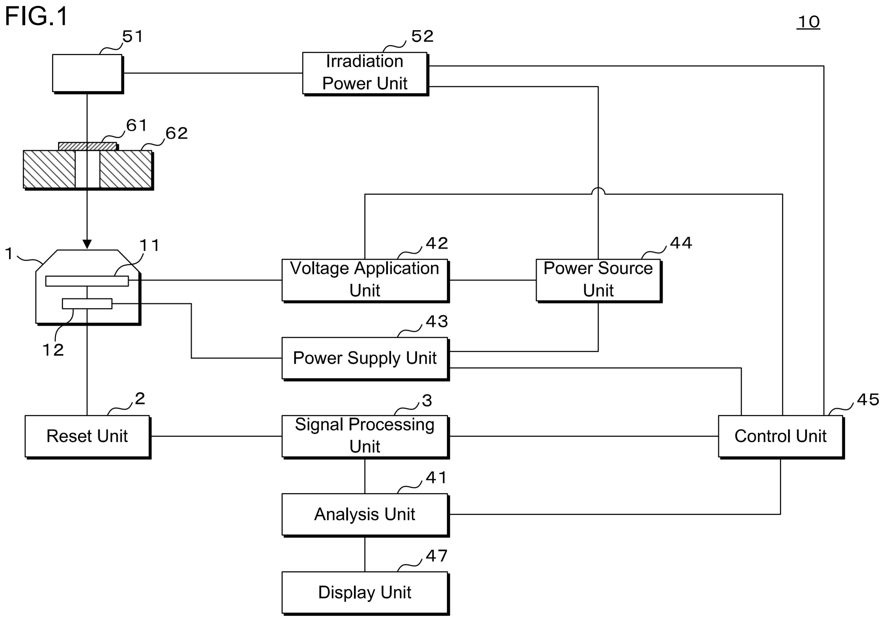

FIG. 1 is a block diagram showing an example of the functional configuration of a radiation detection device 10 according to Embodiment 1. The radiation detection device 10 includes an irradiation unit 51 that irradiates a sample 61 with radiation such as X-rays, a sample stage 62 on which the sample 61 is placed, and a radiation detector 1. The sample stage 62 is shaped so that the radiation emitted from the irradiation unit 51 onto the sample 61 and transmitted through the sample 61 can pass through the sample stage 62. The irradiation unit 51 is, for example, an X-ray tube. An irradiation power unit 52 that supplies the irradiation unit 51 with power for operating the irradiation unit 51 is connected to the irradiation unit 51. A power source unit 44 is connected to the irradiation power unit 52. The irradiation power unit 52 supplies the power supplied from the power source unit 44 to the irradiation unit 51. The irradiation unit 51 receives power from the irradiation power unit 52 and generates radiation.

The radiation detector 1 is arranged on the opposite side of the irradiation unit 51 with the sample 61 interposed therebetween. When the sample 61 is not placed on the sample stage 62, the irradiation unit 51 and the radiation detector 1 face each other. Radiation is emitted from the irradiation unit 51 onto the sample 61, and radiation such as fluorescent X-rays is generated in the sample 61, and the radiation transmitted through the sample 61 or the radiation generated by the sample 61 is incident on the radiation detector 1. The radiation detector 1 detects the incident radiation. In the diagram, the radiation is indicated by an arrow. In addition, the radiation detection device 10 may be configured to hold the sample 61 by a method other than the placing method using the sample stage 62.

The radiation detector 1 can also detect light. The radiation detected by the radiation detector 1 includes alpha rays, beta rays, ions, electrons, and other particle rays. The radiation or light detected by the radiation detector 1 includes X-rays, gamma rays, infrared rays, visible light, ultraviolet rays, and other electromagnetic waves. The irradiation unit 51 may be configured to irradiate the sample 61 with any type of radiation.

The radiation detector 1 includes a radiation detection element 11 and a preamplifier 12. The radiation detection element 11 generally has a flat plate shape, and is formed of a semiconductor such as Si. The radiation detection element 11 includes an n-type semiconductor layer and a p-type semiconductor layer that are stacked. In the radiation detection element 11, a voltage is applied between the n-type semiconductor layer and the p-type semiconductor layer in order to detect radiation. When radiation is incident on the radiation detection element 11, an amount of charge corresponding to the energy of the radiation is generated inside the radiation detection element 11. An electric field is generated inside the radiation detection element 11 by the application of a voltage, and the charge moves due to the electric field. The charge flows into the electrode provided in the radiation detection element 11, and a current signal corresponding to the amount of charge is output from the electrode. For example, electrons flow into the electrode, and a current signal corresponding to the amount of charge of the electrons is output.

The preamplifier 12 is connected to the electrode of the radiation detection element 11. A signal output from the electrode of the radiation detection element 11 is input to the preamplifier 12. The preamplifier 12 converts the current signal into a voltage signal and outputs the voltage signal. The preamplifier 12 outputs a signal corresponding to the amount of charge that has flowed into the electrode of the radiation detection element 11. Since an amount of charge corresponding to the energy of the radiation is generated, and a signal corresponding to the amount of charge is output, the preamplifier 12 outputs a signal corresponding to the energy of the radiation. In addition, a part of the preamplifier 12 may be included inside the radiation detector 1 and the other part thereof may be arranged outside the radiation detector 1.

A voltage application unit 42 that applies a voltage required for radiation detection to the radiation detection element 11 is connected to the radiation detection element 11. A power supply unit 43 that supplies power for operating the preamplifier 12 to the preamplifier 12 is connected to the preamplifier 12. The power source unit 44 is connected to the voltage application unit 42 and the power supply unit 43. The voltage application unit 42 receives power from the power source unit 44 and applies a voltage to the radiation detection element 11. The power supply unit 43 receives power from the power source unit 44 and supplies the power to the preamplifier 12.

A reset unit 2 that resets the signal output from the preamplifier 12 is connected to the preamplifier 12. The reset unit 2 is an analog circuit. A signal processing unit 3 is connected to the reset unit 2. The signal output from the preamplifier 12 is input to the signal processing unit 3 through the reset unit 2. An analysis unit 41 is connected to the signal processing unit 3. A display unit 47, such as a liquid crystal display or an EL display (Electroluminescent Display) is connected to the analysis unit 41. The signal processing unit 3, the analysis unit 41, the voltage application unit 42, the power supply unit 43 and the irradiation power unit 52 are connected to a control unit 45. The control unit 45 controls the operations of the signal processing unit 3, the analysis unit 41, the voltage application unit 42, the power supply unit 43, and the irradiation power unit 52. For example, the control unit 45 is configured using a computer having a calculation unit and a memory. The control unit 45 may be configured to receive the user's operation and control each unit of the radiation detection device 10 in accordance with the received operation.

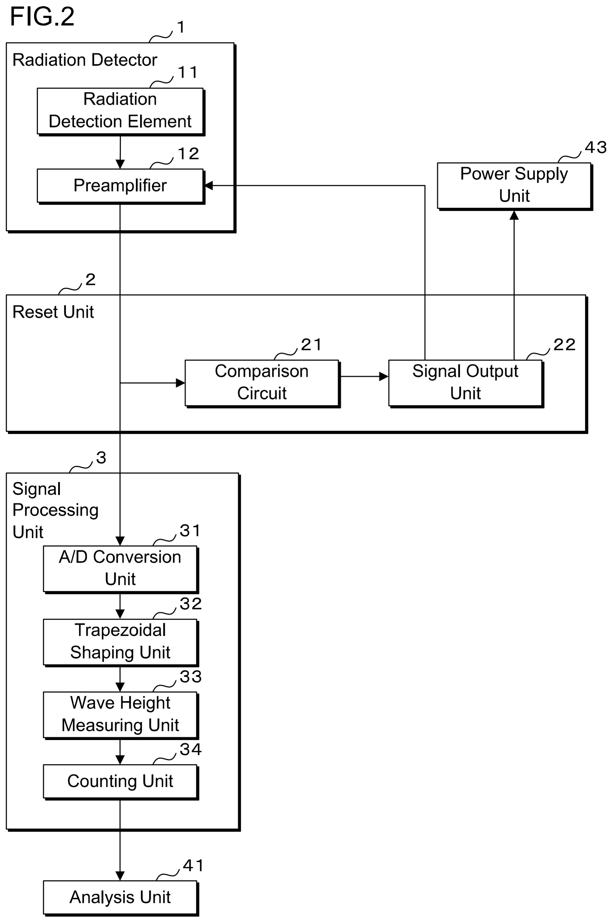

FIG. 2 is a block diagram showing the functional configuration of the radiation detector 1 and the reset unit 2 and the signal processing unit 3 according to Embodiment 1. In FIG. 2, the flow of signals is indicated by arrows. The radiation detection element 11 outputs a current signal corresponding to the energy of the incident radiation. The preamplifier 12 converts the current signal output from the radiation detection element 11 into a voltage signal, and generates a response wave in response to the detection of radiation. In the present embodiment, the response wave is a staircase wave whose signal value increases in a single step when radiation is detected. The radiation detector 1 outputs a signal including the staircase wave generated by the preamplifier 12.

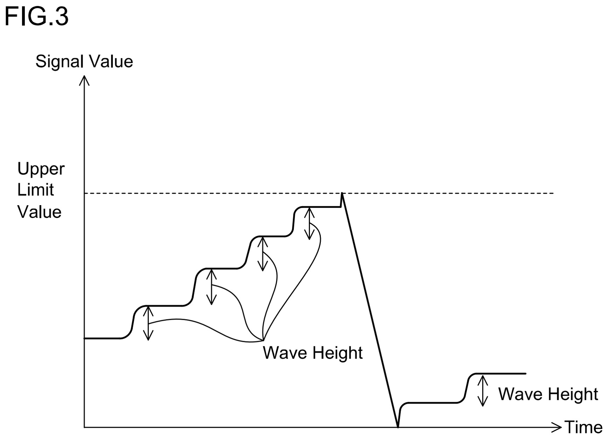

FIG. 3 is a schematic graph showing an example of a signal including a staircase wave. In the diagram, the horizontal axis indicates time, and the vertical axis indicates a signal value. Each time an event occurs in which radiation is incident on the radiation detection element 11 and the radiation detection element 11 detects radiation, the radiation detector 1 outputs a staircase wave whose signal value increases in a single step. In response to one event, one staircase wave whose signal value increases in a single step is generated. When a plurality of events occur, a signal including a plurality of staircase waves is output. Each time an event occurs, the signal value increases. The height of the step by which the signal value increases is the wave height of the staircase wave. The wave height of the staircase wave corresponds to the amount of charge generated by one event and corresponds to the energy of the incident radiation. The radiation detection device 10 determines the energy of the radiation according to the wave height of the staircase wave.

The signal output from the radiation detector 1 is input to the reset unit 2 and the signal processing unit 3. As shown in FIG. 2, the reset unit 2 includes a comparison circuit 21 and a signal output unit 22. The comparison circuit 21 is input with the signal output from the radiation detector 1 and compares the value of the input signal with a predetermined upper limit value. The comparison circuit 21 determines whether or not the signal value has reached the upper limit value, and when the signal value has reached the upper limit value, the comparison circuit 21 inputs a signal indicating that the signal value has reached the upper limit value to the signal output unit 22. When the signal indicating that the signal value has reached the upper limit value is input to the signal output unit 22, the signal output unit 22 inputs a reset signal to the preamplifier 12 to instruct the preamplifier 12 to reset the signal value.

When the reset signal is input, the preamplifier 12 resets the value of the voltage signal to be output to a predetermined value. FIG. 3 shows a signal that is reset. Each time an event occurs, the signal value increases, and the signal value may reach the upper limit value. The preamplifier 12 resets the signal value to a predetermined value that is lower than the upper limit value. The preamplifier 12 and the reset unit 2 performs resetting each time the signal value reaches the upper limit value. In this manner, radiation detection is performed continuously.

As shown in FIG. 2, the signal processing unit 3 includes an A/D (analog/digital) conversion unit 31. The A/D conversion unit 31 receives a signal including a staircase wave from the radiation detector 1 and performs A/D conversion on the signal including the staircase wave. The A/D conversion unit 31 receives a continuous signal, samples the signal at predetermined time intervals, and performs A/D conversion on the values obtained by sampling, thereby generating discrete signal values. The A/D conversion unit 31 generates an A/D-converted signal by sequentially generating signal values at predetermined time intervals. The A/D-converted signal has a plurality of discrete signal values.

A trapezoidal shaping unit 32 is connected to the A/D conversion unit 31. The trapezoidal shaping unit 32 is input with the signal from the A/D conversion unit 31. Between the A/D conversion unit 31 and the trapezoidal shaping unit 32, a conversion unit that converts a signal so as to cancel out waveform distortion caused by signal delay and a noise removal unit that removes noise from the signal may be connected.

The trapezoidal shaping unit 32 is configured using a trapezoidal shaping filter. The trapezoidal shaping unit 32 shapes the waveform of the input signal using a trapezoidal shaping filter, thereby converting a step-like staircase wave included in the signal into a trapezoidal wave. The height from a predetermined signal reference to the maximum value of the trapezoidal wave is assumed to be the wave height of the trapezoidal wave. The wave height of the trapezoidal wave converted from the staircase wave corresponds to the wave height of the staircase wave. A wave height measuring unit 33 is connected to the trapezoidal shaping unit 32. The wave height measuring unit 33 receives the signal from the trapezoidal shaping unit 32 and measures the wave height of the trapezoidal wave included in the signal, thereby measuring the wave height of the staircase wave.

A counting unit 34 is connected to the wave height measuring unit 33. The wave height measuring unit 33 inputs the measured wave height of the staircase wave to the counting unit 34. The counting unit 34 counts the staircase wave for each wave height. For example, the counting unit 34 is a multi-channel analyzer. The counting unit 34 may be configured to count staircase waves for all wave heights, or may be configured to count staircase waves only for a specific wave height.

The signal processing unit 3 outputs data indicating the relationship between the wave height of the staircase wave and the count counted by the counting unit 34. The count corresponds to the number of times that the radiation detector 1 has detected radiation having energy corresponding to the wave height of the staircase wave. The analysis unit 41 receives the data output from the signal processing unit 3. The analysis unit 41 is configured using a computer having a calculation unit and a memory. The analysis unit 41 and the control unit 45 may be configured as the same computer.

The analysis unit 41 performs processing for generating the spectrum of the radiation detected by the radiation detector 1 from the relationship between the wave height of the staircase wave and the count. The spectrum indicates the relationship between the radiation energy corresponding to the wave height and the count. The analysis unit 41 may further perform additional processing, such as elemental analysis, on the sample 61 based on the generated spectrum of the radiation. For example, the radiation detector 1 detects radiation transmitted through the sample 61, and the analysis unit 41 calculates the thickness of the sample 61 based on the intensity of the radiation. For example, the radiation detector 1 detects fluorescent X-rays, and the analysis unit 41 performs qualitative analysis or quantitative analysis of elements included in the sample 61 based on the spectrum of the fluorescent X-rays. The display unit 47 displays the spectrum generated by the analysis unit 41 and the analysis results of the analysis unit 41.

When the irradiation unit 51 generates radiation in the absence of the sample 61, the radiation from the irradiation unit 51 is incident directly on the radiation detector 1 without being emitted to the sample 61. At this time, excessive radiation is incident on the radiation detector 1. Even if the sample 61 is thin, excessive radiation transmitted through the sample 61 is incident on the radiation detector 1. When excessive radiation is incident on the radiation detector 1, the radiation detector 1 may be damaged. For example, an excessive current signal is generated to cause damage to the preamplifier 12. Excessive radiation refers to radiation for which the current signal output from the radiation detector 1 which detected the radiation exceeds the allowable level. For example, the current signal exceeding the allowable level is a signal whose signal value exceeds a first threshold value, which will be described later.

As a method for preventing damage to the radiation detector 1, there is a method using a sensor that detects the presence or absence of the sample 61 or a sensor that detects the thickness of the sample 61. However, it is difficult to secure a space for installing a sensor inside the radiation detection device 10. In addition, the cost of the radiation detection device 10 increases.

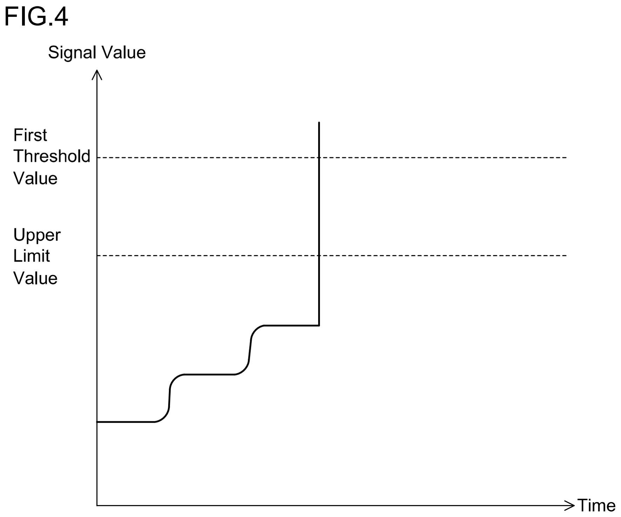

In the present embodiment, the reset unit 2 functions as a stop processing unit, which stops the operation of the radiation detector 1 when excessive radiation is incident on the radiation detector 1, to execute a signal processing method. FIG. 4 is a schematic graph showing an example of a signal output from the radiation detector 1 when excessive radiation is incident. In the diagram, the horizontal axis indicates time, and the vertical axis indicates a signal value. When excessive radiation is incident on the radiation detector 1, the signal value increases abruptly to become a value exceeding the upper limit value.

The comparison circuit 21 of the reset unit 2 compares the value of the signal output from the radiation detector 1 with a predetermined first threshold value exceeding the upper limit value. The state in which the signal value exceeds the first threshold value is a state in which excessive radiation is incident on the radiation detector 1 and the excessive current signal is output from the radiation detector 1. The comparison circuit 21 determines whether or not the signal value exceeds the first threshold value, and when the signal value exceeds the first threshold value, the comparison circuit 21 inputs a signal indicating that the signal value exceeds the first threshold value to the signal output unit 22. In addition, the comparison circuit 21 may be configured to input the signal to the signal output unit 22 when the signal value reaches the first threshold value. In this manner, the reset unit 2 determines that excessive radiation has been incident on the radiation detector 1 by determining that the signal value exceeds the first threshold value.

As shown in FIG. 2, the reset unit 2 is connected to the power supply unit 43. When a signal indicating that the signal value exceeds the first threshold value is input, the signal output unit 22 outputs a stop signal for stopping the operation of the radiation detector 1. The stop signal output from the signal output unit 22 is input to the power supply unit 43. When the stop signal is input, the power supply unit 43 stops supplying power to the preamplifier 12. For example, the signal output unit 22 outputs, as the stop signal, a signal for stopping an enable signal that enables the supply of power to the preamplifier 12. In the power supply unit 43, the enable signal is stopped in response to the stop signal, thereby stopping the supply of power to the preamplifier 12.

Since the supply of power to the preamplifier 12 is stopped, the preamplifier 12 stops its operation. Since the preamplifier 12 stops its operation, the radiation detector 1 stops its operation. Since the stopped preamplifier 12 is no longer affected by the current signal, damage to the preamplifier 12 is prevented and accordingly, damage to the radiation detector 1 is prevented. Since the reset unit 2 performs analog processing, the processing is performed at high speed and accordingly, damage to the radiation detector 1 is quickly prevented.

In addition, the reset unit 2 may be configured to stop the supply of power from the power supply unit 43 to the preamplifier 12 by stopping the supply of power from the power source unit 44 to the power supply unit 43. For example, the signal output unit 22 outputs a stop signal to the power source unit 44, and the power source unit 44 stops supplying power to the power supply unit 43 in response to the stop signal.

In FIG. 1, the configuration is shown in which the irradiation unit 51 and the radiation detector 1 face each other. However, in the radiation detection device 10, the irradiation unit 51 and the radiation detector 1 may be arranged so as not to face each other. Even if the irradiation unit 51 and the radiation detector 1 do not face each other, excessive radiation may be incident on the radiation detector 1, for example, when radiation is incident on the radiation detector 1 directly from the irradiation unit 51. In this case as well, the radiation detection device 10 executes the same processing.

Even when light is incident on the radiation detector 1, the radiation detection device 10 performs the same processing as when radiation is incident on the radiation detector 1. For example, the light may be light for illuminating the sample 61, light incident from outside the radiation detection device 10, light from an indicator inside the radiation detection device 10, or light from an LED on the substrate, a photointerrupter, an encoder, a photoelectric sensor, or a laser displacement meter. For example, the light is light generated by emission of radiation, such as scintillation or luminescence. Even when excessive light is incident on the radiation detector 1, the radiation detector 1 may be damaged. When excessive light is incident on the radiation detector 1, the radiation detection device 10 stops the operation of the preamplifier 12 by performing the same processing as when excessive radiation is incident on the radiation detector 1.

As described above in detail, in Embodiment 1, the reset unit 2 compares the value of the signal output from the radiation detector 1 with the first threshold value, and stops the operation of the preamplifier 12 when the signal value exceeds the first threshold value. As a result, when excessive radiation or excessive light is incident on the radiation detector 1, the operation of the radiation detector 1 is stopped to prevent damage to the radiation detector 1. Damage to the radiation detector 1 can be prevented without using a sensor for detecting the presence or absence of the sample 61 or a sensor for detecting the thickness of the sample 61.

### <Embodiment 2>

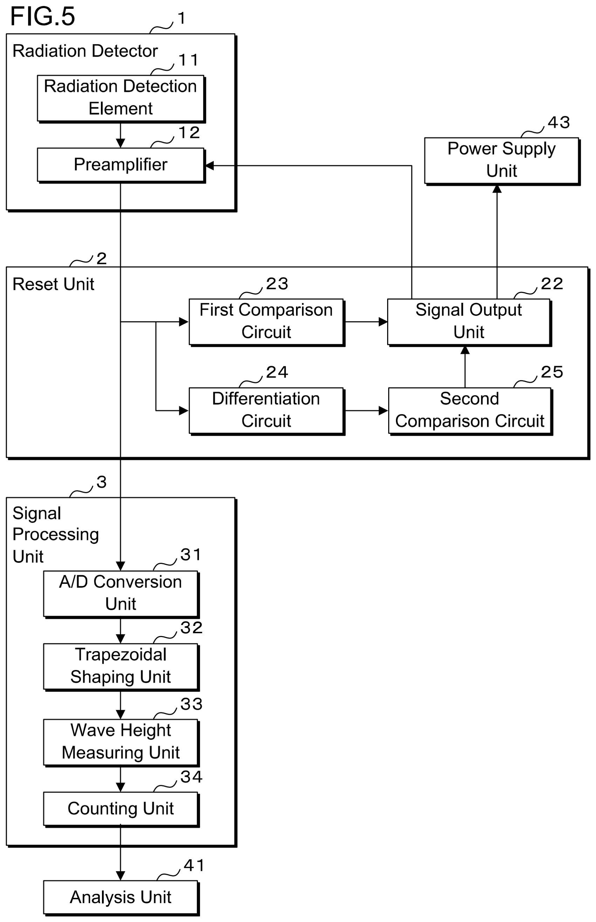

FIG. 5 is a block diagram showing the functional configuration of a radiation detector 1 and a reset unit 2 and a signal processing unit 3 according to Embodiment 2. The reset unit 2 includes a first comparison circuit 23, a signal output unit 22, a differentiation circuit 24, and a second comparison circuit 25. The configuration of the other parts of the radiation detection device 10 is the same as that in Embodiment 1. The irradiation unit 51 and the radiation detector 1 may be arranged so as not to face each other. The first comparison circuit 23 is input with a signal output from the radiation detector 1 and compares the value of the input signal with the upper limit value. The first comparison circuit 23 determines whether or not the signal value has reached the upper limit value, and when the signal value has reached the upper limit value, the first comparison circuit 23 inputs a signal indicating that the signal value has reached the upper limit value to the signal output unit 22. The signal output unit 22 inputs a reset signal to the preamplifier 12, and the preamplifier 12 performs resetting.

The differentiation circuit 24 is input with a signal output from the radiation detector 1, differentiates the value of the input signal, and inputs the differentiated value to the second comparison circuit 25. As shown in FIG. 4, when excessive radiation is incident on the radiation detector 1, the value of the signal output from the radiation detector 1 increases abruptly, and the rate of increase (slope) in the signal value with respect to time becomes large.

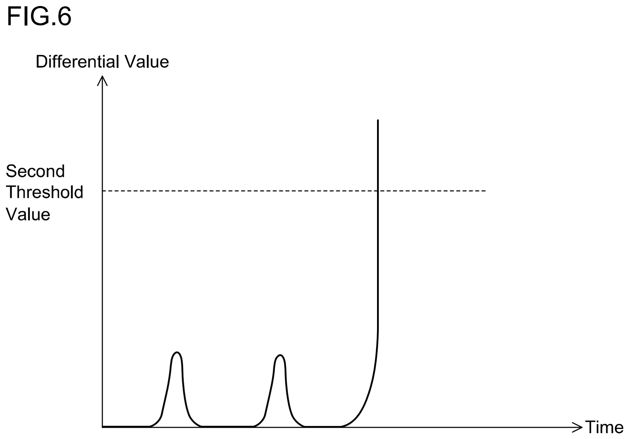

FIG. 6 is a schematic graph showing an example of the differential value of the signal output from the radiation detector 1 when excessive radiation is incident. In the diagram, the horizontal axis indicates time, and the vertical axis indicates the differential value of the signal. When excessive radiation is incident on the radiation detector 1, the rate of increase in the signal value increases, and the differential value of the signal increases to become a value that is much larger than the normal differential value. The second comparison circuit 25 compares the differential value from the differentiation circuit 24 with a predetermined second threshold value. The state in which the differential value exceeds the second threshold value is a state in which excessive radiation is incident on the radiation detector 1 and the signal output from the radiation detector 1 increases abruptly.

The second comparison circuit 25 determines whether or not the differential value exceeds the second threshold value, and when the differential value exceeds the second threshold value, the second comparison circuit 25 inputs a signal indicating that the differential value exceeds the second threshold value to the signal output unit 22. In addition, the second comparison circuit 25 may be configured to input a signal to the signal output unit 22 when the differential value reaches the second threshold value. In this manner, the reset unit 2 compares the rate of increase of the signal with respect to time with the second threshold value by comparing the differential value of the signal with the second threshold value. The reset unit 2 determines that excessive radiation has been incident on the radiation detector 1 by determining that the rate of increase of the signal with respect to time exceeds the second threshold value.

When a signal indicating that the differential value exceeds the second threshold value is input, the signal output unit 22 outputs a stop signal for stopping the operation of the radiation detector 1. The stop signal output from the signal output unit 22 is input to the power supply unit 43. When the stop signal is input, the power supply unit 43 stops supplying power to the preamplifier 12.

Since the supply of power to the preamplifier 12 is stopped, the preamplifier 12 stops its operation, and accordingly, the radiation detector 1 stops its operation. Damage to the preamplifier 12 is prevented, and damage to the radiation detector 1 is prevented. In addition, the reset unit 2 may be configured to stop the supply of power from the power supply unit 43 to the preamplifier 12 by stopping the supply of power from the power source unit 44 to the power supply unit 43.

In FIG. 5, the configuration is shown in which the reset unit 2 has the differentiation circuit 24. However, the reset unit 2 may have, instead of the differentiation circuit 24, a circuit that calculates a value other than the differential value corresponding to the rate of increase in the signal value. For example, the reset unit 2 may have a circuit that calculates a difference between a plurality of signal values, instead of the differentiation circuit 24. The reset unit 2 outputs a stop signal when the value corresponding to the rate of increase in the signal value exceeds the second threshold value. In this case as well, the preamplifier 12 stops its operation. In addition, when excessive light is incident on the radiation detector 1, the radiation detection device 10 performs the same processing as when excessive radiation is incident on the radiation detector 1.

As described above in detail, in Embodiment 2 as well, the reset unit 2 functions as a stop processing unit. The reset unit 2 compares the rate of increase in the value of the signal output from the radiation detector 1 with the second threshold value, and stops the operation of the preamplifier 12 when the rate of increase exceeds the second threshold value. As a result, when excessive radiation or excessive light is incident on the radiation detector 1, the operation of the radiation detector 1 is stopped to prevent damage to the radiation detector 1.

### <Embodiment 3>

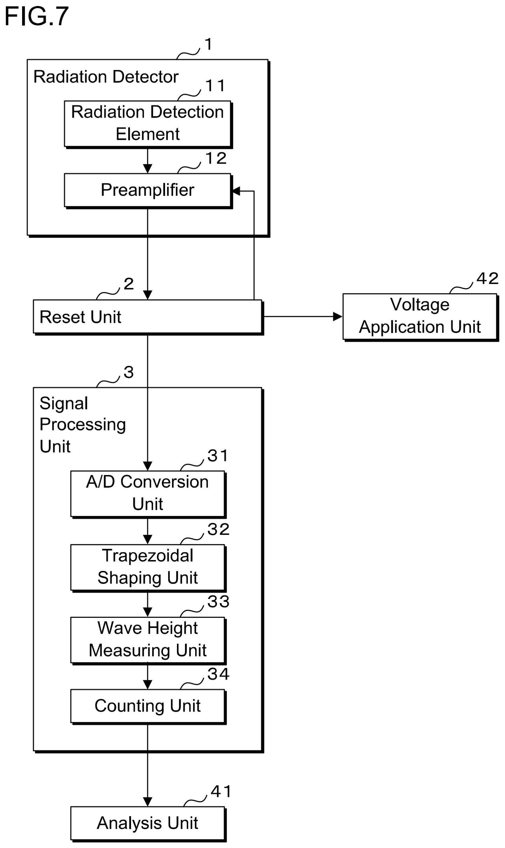

FIG. 7 is a block diagram showing the functional configuration of a radiation detector 1 and a reset unit 2 and a signal processing unit 3 according to Embodiment 3. The reset unit 2 has the same configuration as that in Embodiment 1 or 2. That is, the reset unit 2 compares the value of the signal output from the radiation detector 1 with the first threshold value, or compares the rate of increase in the value of the signal output from the radiation detector 1 with the second threshold value. The reset unit 2 is connected to a voltage application unit 42. A signal output unit 22 outputs a signal to the voltage application unit 42. The configuration of the other parts of the radiation detection device 10 is the same as that in Embodiment 1 or 2. The irradiation unit 51 and the radiation detector 1 may be arranged so as not to face each other.

The reset unit 2 outputs a stop signal when the value of the signal output from the radiation detector 1 exceeds the first threshold value or when the rate of increase in the signal value exceeds the second threshold value. The stop signal is input to the voltage application unit 42. When the stop signal is input, the voltage application unit 42 stops applying a voltage required for radiation detection to the radiation detection element 11. For example, the signal output unit 22 outputs, as the stop signal, a signal for stopping an enable signal that enables the application of a voltage to the radiation detection element 11. In the voltage application unit 42, the enable signal is stopped in response to the stop signal, thereby stopping the application of a voltage to the radiation detection element 11.

Since the application of a voltage to the radiation detection element 11 is stopped, the radiation detection element 11 stops its operation for radiation detection. Since the radiation detection element 11 stops its operation, the radiation detector 1 stops its operation. Since the radiation detection element 11 that has stopped its operation for radiation detection no longer outputs a current signal, the preamplifier 12 is no longer affected by the excessive current signal. Therefore, damage to the preamplifier 12 is prevented, and damage to the radiation detector 1 is prevented.

In addition, the reset unit 2 may be configured to stop the application of a voltage from the voltage application unit 42 to the radiation detection element 11 by stopping the supply of power from the power source unit 44 to the voltage application unit 42. For example, the reset unit 2 outputs a stop signal to the power source unit 44, and the power source unit 44 stops supplying power to the voltage application unit 42 in response to the stop signal. In addition, when excessive light is incident on the radiation detector 1, the radiation detection device 10 performs the same processing as when excessive radiation is incident on the radiation detector 1.

As described above in detail, in Embodiment 3 as well, the reset unit 2 functions as a stop processing unit. The reset unit 2 stops the operation of the radiation detection element 11 when the value of the signal output from the radiation detector 1 exceeds the first threshold value or when the rate of increase in the signal value exceeds the second threshold value. As a result, when excessive radiation or excessive light is incident on the radiation detector 1, the operation of the radiation detector 1 is stopped to prevent damage to the radiation detector 1.

### <Embodiment 4>

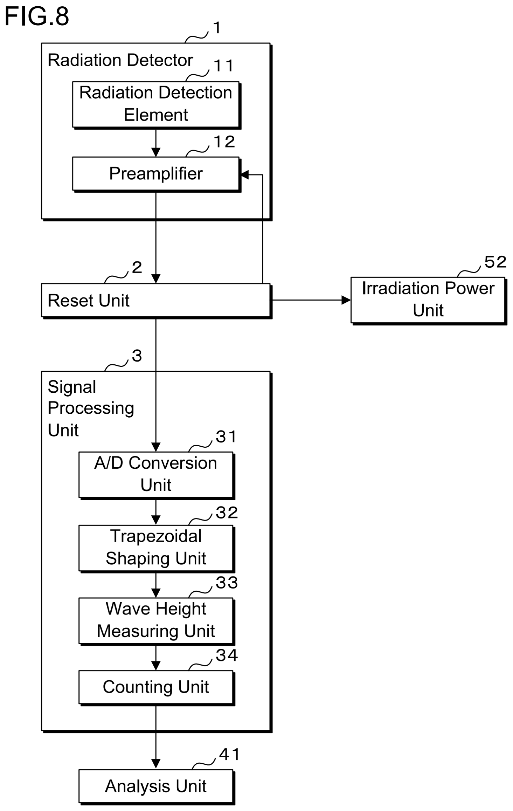

FIG. 8 is a block diagram showing the functional configuration of a radiation detector 1 and a reset unit 2 and a signal processing unit 3 according to Embodiment 4. The reset unit 2 has the same configuration as that in Embodiment 1 or 2. That is, the reset unit 2 compares the value of the signal output from the radiation detector 1 with the first threshold value, or compares the rate of increase in the value of the signal output from the radiation detector 1 with the second threshold value. The reset unit 2 is connected to an irradiation power unit 52. A signal output unit 22 outputs a signal to the irradiation power unit 52. The configuration of the other parts of the radiation detection device 10 is the same as that in Embodiment 1 or 2. The irradiation unit 51 and the radiation detector 1 may be arranged so as not to face each other.

In Embodiment 4, the reset unit 2 functions as a stop processing unit that stops the generation of radiation when excessive radiation is incident on the radiation detector 1. The reset unit 2 outputs a stop signal when the value of the signal output from the radiation detector 1 exceeds the first threshold value or when the rate of increase in the signal value exceeds the second threshold value. The stop signal is input to the irradiation power unit 52. When the stop signal is input, the irradiation power unit 52 stops supplying power to the irradiation unit 51. For example, the signal output unit 22 outputs, as the stop signal, a signal for stopping an enable signal that enables the supply of power to the irradiation unit 51. In the irradiation power unit 52, the enable signal is stopped in response to the stop signal, thereby stopping the supply of power to the irradiation unit 51. Since the supply of power to the irradiation unit 51 is stopped, the irradiation unit 51 stops generating radiation. In this manner, the generation of radiation is stopped.

Since the generation of radiation is stopped, the incidence of excessive radiation on the radiation detector 1 is stopped. The radiation detector 1 no longer outputs an excessive current signal, and the preamplifier 12 is no longer affected by the excessive current signal. Therefore, damage to the preamplifier 12 is prevented, and damage to the radiation detector 1 is prevented.

In addition, the reset unit 2 may be configured to stop the supply of power from the irradiation power unit 52 to the irradiation unit 51 by stopping the supply of power from the power source unit 44 to the irradiation power unit 52. For example, the reset unit 2 outputs a stop signal to the power source unit 44, and the power source unit 44 stops supplying power to the irradiation power unit 52 in response to the stop signal. In addition, when excessive light is incident on the radiation detector 1, the radiation detection device 10 performs the same processing as when excessive radiation is incident on the radiation detector 1.

As described above in detail, in Embodiment 4 as well, the reset unit 2 functions as a stop processing unit. The reset unit 2 stops the irradiation unit 51 to stop the generation of radiation when the value of the signal output from the radiation detector 1 exceeds the first threshold value or when the rate of increase in the signal value exceeds the second threshold value. As a result, when excessive radiation or excessive light is incident on the radiation detector 1, the generation of radiation is stopped to prevent damage to the radiation detector 1.

### <Embodiment 5>

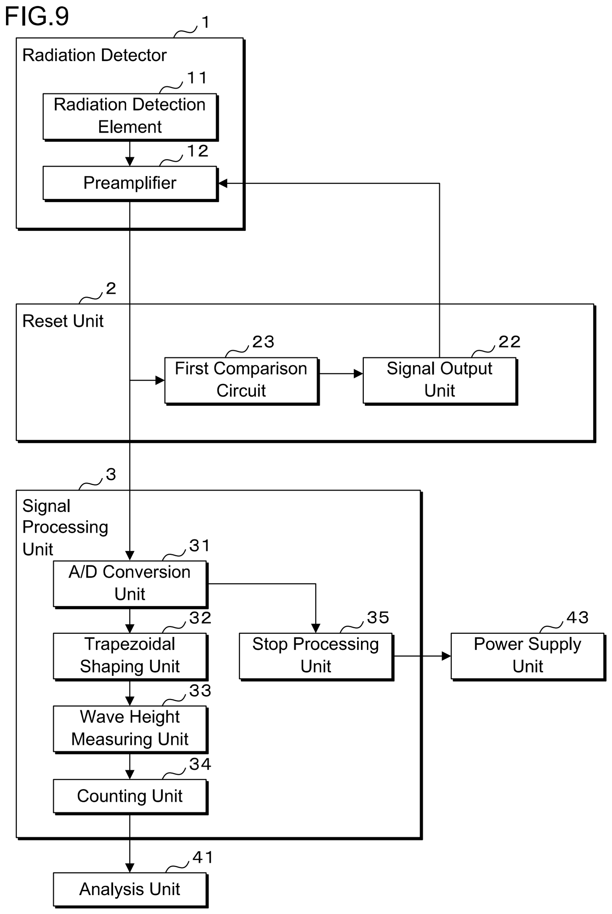

FIG. 9 is a block diagram showing the functional configuration of a radiation detector 1 and a reset unit 2 and a signal processing unit 3 according to Embodiment 5. The reset unit 2 includes a first comparison circuit 23 and a signal output unit 22. The first comparison circuit 23 compares the value of the signal output from the radiation detector 1 with the upper limit value. The first comparison circuit 23 determines whether or not the signal value has reached the upper limit value, and when the signal value has reached the upper limit value, the first comparison circuit 23 inputs a signal indicating that the signal value has reached the upper limit value to the signal output unit 22. The signal output unit 22 inputs a reset signal to the preamplifier 12, and the preamplifier 12 performs resetting.

The signal processing unit 3 includes an A/D conversion unit 31, a trapezoidal shaping unit 32, a wave height measuring unit 33, a counting unit 34, and a stop processing unit 35. The stop processing unit 35 executes a signal processing method. The stop processing unit 35 is connected to the A/D conversion unit 31. The stop processing unit 35 is configured using elements that perform calculations, and performs digital processing. For example, the stop processing unit 35 is configured using an FPGA (field-programmable gate array). The stop processing unit 35 is input with a signal including a staircase wave from the A/D conversion unit 31. The input signal is a digital signal after A/D conversion. A processing unit for performing some kind of signal processing, such as a noise filter, may be provided between the A/D conversion unit 31 and the stop processing unit 35. The signal after A/D conversion by the A/D conversion unit 31 is subjected to signal processing by the processing unit, and then the signal is input to the stop processing unit 35. In addition, the stop processing unit 35 is connected to the power supply unit 43. The configuration of the other parts of the radiation detection device 10 is the same as that in Embodiments 1 to 4. The irradiation unit 51 and the radiation detector 1 may be arranged so as not to face each other.

The stop processing unit 35 receives a signal from the A/D conversion unit 31, compares the signal value with the first threshold value, and performs processing to output a stop signal when the signal value exceeds the first threshold value. The stop processing unit 35 may perform processing to output a stop signal when the signal value reaches the first threshold value. Alternatively, the stop processing unit 35 receives a signal from the A/D conversion unit 31, compares the rate of increase in the signal value with the second threshold value, and performs processing to output a stop signal when the rate of increase in the signal value exceeds the second threshold value. The stop processing unit 35 may perform processing to output a stop signal when the rate of increase in the signal value reaches the second threshold value.

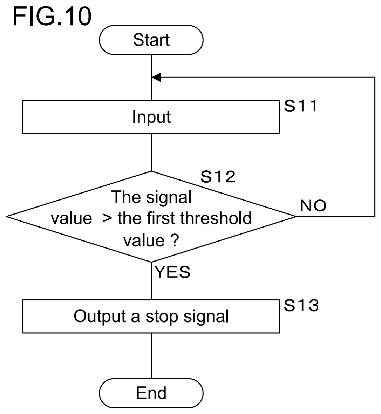

FIG. 10 is a flowchart showing a first example of the procedure of information processing executed by the stop processing unit 35 according to Embodiment 5. The stop processing unit 35 is input with a signal from the A/D conversion unit 31 (S11). Then, the stop processing unit 35 determines whether or not the value of the input signal exceeds the first threshold value (S12). In S12, the stop processing unit 35 may determine that the signal value has exceeded the first threshold value when the signal value continues to exceed the first threshold value for a period of a predetermined number of clocks. The stop processing unit 35 may determine that the signal value does not exceed the first threshold value when the signal value does not continue to exceed the first threshold value for a period of a predetermined number of clocks. In this manner, the stop processing unit 35 determines that excessive radiation has been incident on the radiation detector 1 by determining that the signal value exceeds the first threshold value. When the signal value does not exceed the first threshold value (S12: NO), the stop processing unit 35 returns the process to S11 to be input with the next signal. The signal processing unit 3 performs processing to count the staircase wave for each wave height.

When it is determined that the signal value exceeds the first threshold value (S12: YES), the stop processing unit 35 outputs a stop signal (S13) and ends the process. The stop processing unit 35 executes S11 to S13 to perform processing to output a stop signal when the value of the signal output from the radiation detector 1 exceeds the first threshold value. The stop processing unit 35 repeats the processes of S11 to S13 each time a signal is input from the A/D conversion unit 31.

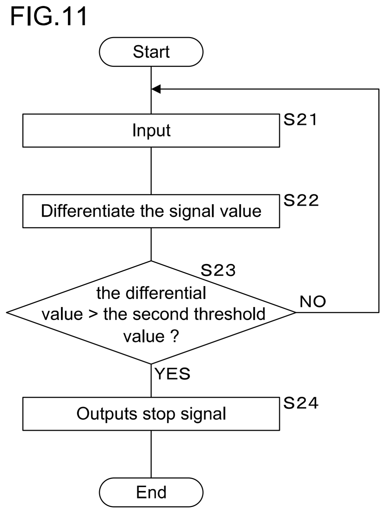

FIG. 11 is a flowchart showing a second example of the procedure of information processing executed by the stop processing unit 35 according to Embodiment 5. The stop processing unit 35 is input with a signal from the A/D conversion unit 31 (S21), and differentiates the value of the input signal (S22). The stop processing unit 35 determines whether or not the calculated differential value exceeds the second threshold value (S23). In S23, the stop processing unit 35 may determine that the differential value has exceeded the second threshold value when the differential value continues to exceed the second threshold value for a period of a predetermined number of clocks. The stop processing unit 35 may determine that the differential value does not exceed the second threshold value when the differential value does not continue to exceed the second threshold value for a period of a predetermined number of clocks. In this manner, the stop processing unit 35 compares the rate of increase of the signal with respect to time with the second threshold value by comparing the differential value of the signal with the second threshold value. In this manner, the stop processing unit 35 determines that excessive radiation has been incident on the radiation detector 1 by determining that the rate of increase of the signal with respect to time exceeds the second threshold value. When the differential value does not exceed the second threshold value (S23: NO), the stop processing unit 35 returns the process to S21 to be input with the next signal. The signal processing unit 3 performs processing to count the staircase waves for each wave height.

When it is determined that the differential value exceeds the second threshold value (S23: YES), the stop processing unit 35 outputs a stop signal (S24) and ends the process. The stop processing unit 35 executes S21 to S24 to perform processing to output a stop signal when the rate of increase in the value of the signal output from the radiation detector 1 exceeds the second threshold value. The stop processing unit 35 repeats the processes of S21 to S24 as needed.

In addition, the stop processing unit 35 may perform processing using a value other than the differential value corresponding to the rate of increase in the signal value. For example, the stop processing unit 35 calculates the difference between a plurality of signal values as a value corresponding to the rate of increase in the signal value. The stop processing unit 35 calculates a value corresponding to the rate of increase in the signal value in S22, and determines whether or not the calculated value exceeds the second threshold value in S23.

The stop signal output from the stop processing unit 35 is input to the power supply unit 43. When the stop signal is input, the power supply unit 43 stops supplying power to the preamplifier 12. Since the supply of power to the preamplifier 12 is stopped, the preamplifier 12 stops its operation, and accordingly, the radiation detector 1 stops its operation. Damage to the preamplifier 12 is prevented, and damage to the radiation detector 1 is prevented. In addition, the stop processing unit 35 may be configured to stop the supply of power from the power supply unit 43 to the preamplifier 12 by stopping the supply of power from the power source unit 44 to the power supply unit 43.

As described above in detail, in Embodiment 5 as well, the stop processing unit 35 stops the operation of the preamplifier 12 when the value of the signal output from the radiation detector 1 exceeds the first threshold value or when the rate of increase in the signal value exceeds the second threshold value. As a result, when excessive radiation or excessive light is incident on the radiation detector 1, the operation of the radiation detector 1 is stopped to prevent damage to the radiation detector 1. In Embodiment 5, since the stop processing unit 35 performs digital processing, processing for reducing the influence of noise is possible. For example, when a period during which the signal value exceeds the first threshold value or a period during which the rate of increase in the signal value exceeds the second threshold value continues for only one clock period, the stop processing unit 35 assumes that noise has occurred and does not stop the operation of the radiation detector 1. As a result, more accurate processing is performed, and the occurrence of erroneous operation in which the operation of the radiation detector 1 is stopped due to noise is suppressed.

### <Embodiment 6>

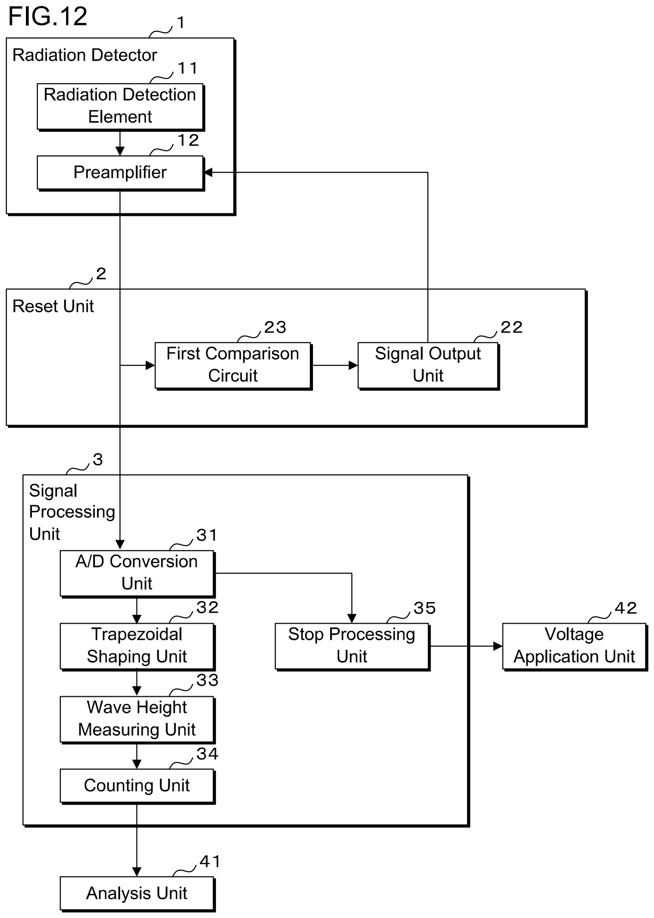

FIG. 12 is a block diagram showing the functional configuration of a radiation detector 1 and a reset unit 2 and a signal processing unit 3 according to Embodiment 6. A stop processing unit 35 is connected to a voltage application unit 42. The configuration of the other parts of the radiation detection device 10 is the same as that in Embodiment 5. The stop processing unit 35 executes the processes of S11 to S13 or the processes of S21 to S24. That is, the stop processing unit 35 compares the value of the signal input from the A/D conversion unit 31 with the first threshold value, and outputs a stop signal when the signal value exceeds the first threshold value. Alternatively, the stop processing unit 35 compares the rate of increase in the value of the signal input from the A/D conversion unit 31 with the second threshold value, and outputs a stop signal when the rate of increase in the signal value exceeds the second threshold value.

The stop signal output from the stop processing unit 35 is input to the voltage application unit 42. When the stop signal is input, the voltage application unit 42 stops applying a voltage required for radiation detection to the radiation detection element 11. Since the application of a voltage to the radiation detection element 11 is stopped, the radiation detection element 11 stops its operation for radiation detection, and accordingly, the radiation detector 1 stops its operation. The preamplifier 12 is no longer affected by the excessive current signal, damage to the preamplifier 12 is prevented and accordingly, damage to the radiation detector 1 is prevented. In addition, the stop processing unit 35 may be configured to stop the application of a voltage from the voltage application unit 42 to the radiation detection element 11 by stopping the supply of power from the power source unit 44 to the voltage application unit 42. In addition, when excessive light is incident on the radiation detector 1, the radiation detection device 10 performs the same processing as when excessive radiation is incident on the radiation detector 1.

As described above in detail, in Embodiment 6, the stop processing unit 35 stops the operation of the radiation detection element 11 when the value of the signal output from the radiation detector 1 exceeds the first threshold value or when the rate of increase in the signal value exceeds the second threshold value. As a result, when excessive radiation or excessive light is incident on the radiation detector 1, the operation of the radiation detector 1 is stopped to prevent damage to the radiation detector 1.

### <Embodiment 7>

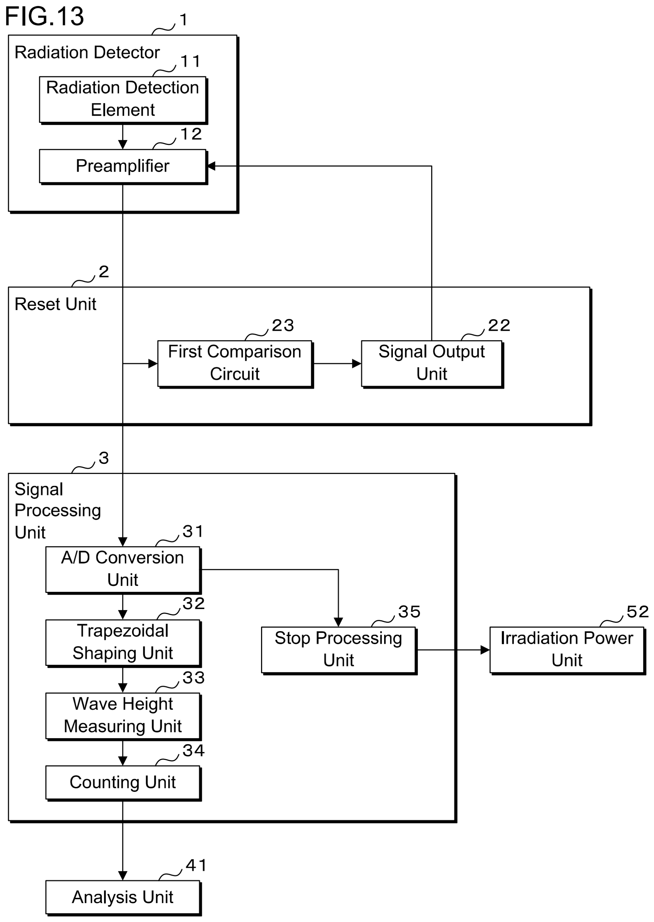

FIG. 13 is a block diagram showing the functional configuration of a radiation detector 1 and a reset unit 2 and a signal processing unit 3 according to Embodiment 6. A stop processing unit 35 is connected to an irradiation power unit 52. The configuration of the other parts of the radiation detection device 10 is the same as that in Embodiment 5. The stop processing unit 35 executes the processes of S11 to S13 or the processes of S21 to S24. That is, the stop processing unit 35 compares the value of the signal input from the A/D conversion unit 31 with the first threshold value, and outputs a stop signal when the signal value exceeds the first threshold value. Alternatively, the stop processing unit 35 compares the rate of increase in the value of the signal input from the A/D conversion unit 31 with the second threshold value, and outputs a stop signal when the rate of increase in the signal value exceeds the second threshold value.

The stop signal output from the stop processing unit 35 is input to the irradiation power unit 52. When the stop signal is input, the irradiation power unit 52 stops supplying power to the irradiation unit 51. Since the supply of power to the irradiation unit 51 is stopped, the irradiation unit 51 stops generating radiation. Since the generation of radiation is stopped, the incidence of excessive radiation on the radiation detector 1 is stopped. The preamplifier 12 is no longer affected by the excessive current signal, damage to the preamplifier 12 is prevented, and accordingly, damage to the radiation detector 1 is prevented. In addition, the stop processing unit 35 may be configured to stop the supply of power from the irradiation power unit 52 to the irradiation unit 51 by stopping the supply of power from the power source unit 44 to the irradiation power unit 52.

As described above in detail, in Embodiment 7, the stop processing unit 35 stops the irradiation unit 51 to stop the generation of radiation when the value of the signal output from the radiation detector 1 exceeds the first threshold value or when the rate of increase in the signal value exceeds the second threshold value. As a result, when excessive radiation is incident on the radiation detector 1, the generation of radiation is stopped to prevent damage to the radiation detector 1.

### <Embodiment 8>

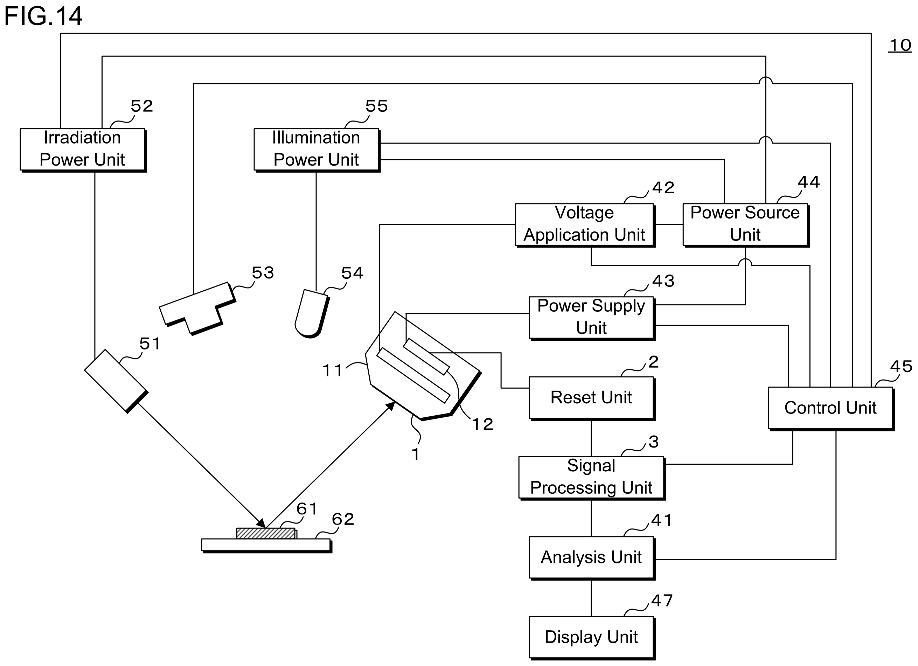

FIG. 14 is a block diagram showing an example of the functional configuration of a radiation detection device 10 according to Embodiment 8. The radiation detection device 10 includes an irradiation unit 51, an irradiation power unit 52, a sample stage 62, a radiation detector 1, a reset unit 2, a signal processing unit 3, an analysis unit 41, a voltage application unit 42, a power supply unit 43, a power source unit 44, and a control unit 45. The radiation detector 1 is arranged at a position where radiation generated from a sample 61 irradiated with radiation from the irradiation unit 51 is detected.

The radiation detection device 10 further includes an imaging unit 53 for imaging the sample 61 and an illumination unit 54 for illuminating the sample 61. The illumination unit 54 corresponds to a light-emitting unit. The illumination unit 54 has a light source such as an LED, and when the light source is turned on, the illumination unit 54 generates visible light to illuminate the sample 61. The imaging unit 53 images the sample 61 illuminated by the illumination unit 54. For example, the result of imaging by the imaging unit 53 is used for the positioning of the sample 61.

An illumination power unit 55 that supplies power for operating the illumination unit 54 to the illumination unit 54 is connected to the illumination unit 54. The power source unit 44 is connected to the illumination power unit 55. The illumination power unit 55 supplies the power supplied from the power source unit 44 to the illumination unit 54. The illumination unit 54 receives the power from the illumination power unit 55 to turn on the light source and generate visible light. The imaging unit 53 and the illumination power unit 55 are connected to the control unit 45. The control unit 45 controls the operations of the imaging unit 53 and the illumination power unit 55.

When the radiation detector 1 operates with the light source of the illumination unit 54 turned on, visible light from the illumination unit 54 is incident on the radiation detector 1, and the radiation detector 1 detects the visible light. Since the visible light for illuminating the sample 61 has a high intensity, excessive visible light is incident on the radiation detector 1 to damage the radiation detector 1. For example, an excessive current signal is generated to cause damage to the preamplifier 12. In Embodiment 8, the reset unit 2 functions as a stop processing unit that stops the generation of visible light when excessive visible light is incident on the radiation detector 1.

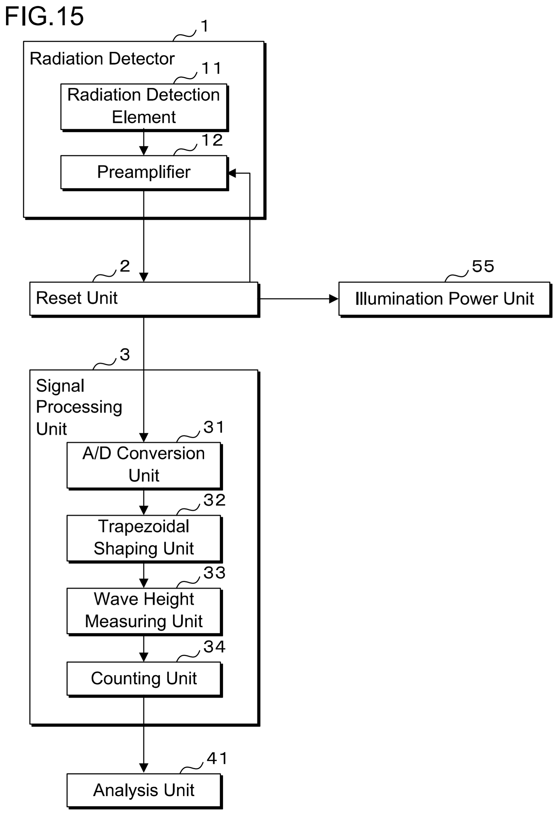

FIG. 15 is a block diagram showing the functional configuration of a radiation detector 1 and a reset unit 2 and a signal processing unit 3 according to Embodiment 8. The reset unit 2 has the same configuration as that in Embodiment 1 or 2. That is, the reset unit 2 compares the value of the signal output from the radiation detector 1 with the first threshold value, or compares the rate of increase in the value of the signal output from the radiation detector 1 with the second threshold value. The reset unit 2 is connected to an illumination power unit 55. The signal output unit 22 outputs a signal to the illumination power unit 55. The configuration of the other parts of the radiation detection device 10 is the same as that in Embodiments 1 to 4. The irradiation unit 51 and the radiation detector 1 may be arranged so as to face each other.

The reset unit 2 outputs a stop signal when the value of the signal output from the radiation detector 1 exceeds the first threshold value or when the rate of increase in the signal value exceeds the second threshold value. The stop signal is input to the illumination power unit 55. When the stop signal is input, the illumination power unit 55 stops supplying power to the illumination unit 54. For example, the signal output unit 22 outputs, as the stop signal, a signal for stopping an enable signal that enables the supply of power to the illumination unit 54. In the illumination power unit 55, the enable signal is stopped in response to the stop signal, thereby stopping the supply of power to the illumination unit 54. Since the supply of power to the illumination unit 54 is stopped, the irradiation unit 51 stops generating visible light. In this manner, the generation of visible light is stopped.

Since the generation of visible light by the illumination unit 54 is stopped, the incidence of excessive visible light on the radiation detector 1 is stopped. The radiation detector 1 no longer outputs an excessive current signal, and the preamplifier 12 is no longer affected by the excessive current signal. Therefore, damage to the preamplifier 12 is prevented, and damage to the radiation detector 1 is prevented.

In addition, the reset unit 2 may be configured to stop the supply of power from the illumination power unit 55 to the illumination unit 54 by stopping the supply of power from the power source unit 44 to the illumination power unit 55. For example, the reset unit 2 outputs a stop signal to the power source unit 44, and the power source unit 44 stops supplying power to the illumination power unit 55 in response to the stop signal.

As described above in detail, in Embodiment 8, the reset unit 2 functions as a stop processing unit. The reset unit 2 stops the illumination unit 54 to stop the generation of visible light when the value of the signal output from the radiation detector 1 exceeds the first threshold value or when the rate of increase in the signal value exceeds the second threshold value. As a result, when excessive visible light is incident on the radiation detector 1, the generation of visible light is stopped to prevent damage to the radiation detector 1. In addition, the radiation detection device 10 may be configured to stop the operation of the radiation detector 1 or stop generating radiation when excessive radiation is incident on the radiation detector 1, as in any of Embodiments 1 to 4.

### <Embodiment 9>

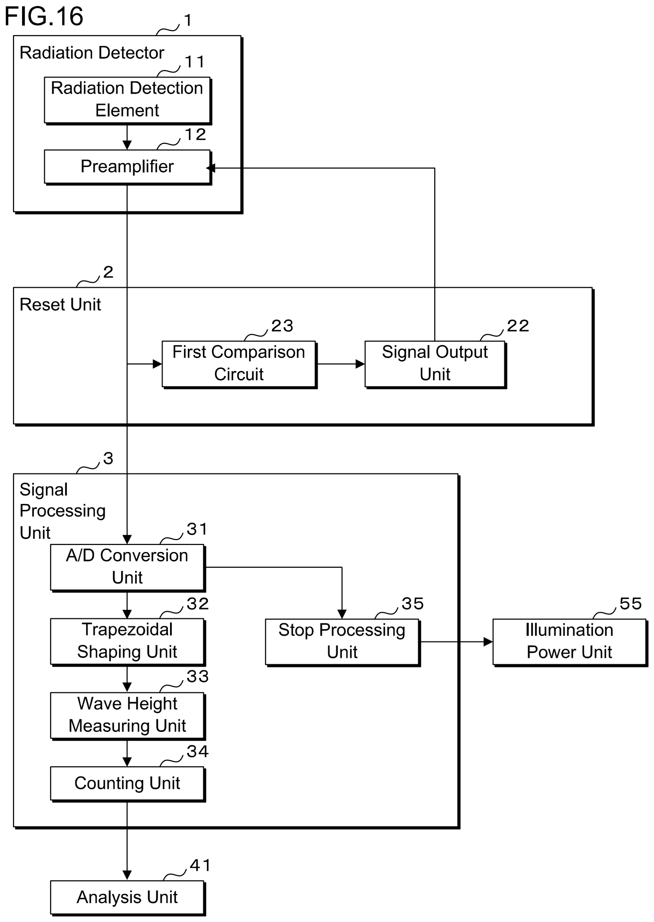

FIG. 16 is a block diagram showing the functional configuration of a radiation detector 1 and a reset unit 2 and a signal processing unit 3 according to Embodiment 9. The configuration of the radiation detection device 10 other than the reset unit 2 and the signal processing unit 3 is the same as that in Embodiment 8. A stop processing unit 35 is connected to an illumination power unit 55. The configuration of the other parts of the signal processing unit 3 is the same as that in Embodiment 5. The stop processing unit 35 executes the processes of S11 to S13 or the processes of S21 to S24. That is, the stop processing unit 35 compares the value of the signal input from the A/D conversion unit 31 with the first threshold value, and outputs a stop signal when the signal value exceeds the first threshold value. Alternatively, the stop processing unit 35 compares the rate of increase in the value of the signal input from the A/D conversion unit 31 with the second threshold value, and outputs a stop signal when the rate of increase in the signal value exceeds the second threshold value.

The stop signal output from the stop processing unit 35 is input to the illumination power unit 55. When the stop signal is input, the illumination power unit 55 stops supplying power to the illumination unit 54. Since the supply of power to the illumination unit 54 is stopped, the illumination unit 54 stops generating visible light. Since the generation of visible light by the illumination unit 54 is stopped, the incidence of excessive visible light on the radiation detector 1 is stopped. The preamplifier 12 is no longer affected by the excessive current signal, damage to the preamplifier 12 is prevented and accordingly, damage to the radiation detector 1 is prevented. In addition, the stop processing unit 35 may be configured to stop the supply of power from the illumination power unit 55 to the illumination unit 54 by stopping the supply of power from the power source unit 44 to the illumination power unit 55.

As described above in detail, in Embodiment 9, the stop processing unit 35 stops the illumination unit 54 to stop the generation of visible light when the value of the signal output from the radiation detector 1 exceeds the first threshold value or when the rate of increase in the signal value exceeds the second threshold value. As a result, when excessive visible light is incident on the radiation detector 1, the generation of visible light is stopped to prevent damage to the radiation detector 1. In addition, the radiation detection device 10 may be configured to stop the operation of the radiation detector 1 or stop generating radiation when excessive radiation is incident on the radiation detector 1, as in any of Embodiments 5 to 7.

In Embodiments 8 and 9, a form is shown in which the illumination unit 54 emits visible light, but the illumination unit 54 may emit infrared light or ultraviolet light. In Embodiments 8 and 9, an example is shown in which the radiation detection device 10 includes the illumination unit 54 as a light-emitting unit, but the radiation detection device 10 may include a light-emitting unit other than the illumination unit 54. For example, the light-emitting unit may be an indicator, a photointerrupter, an encoder, a photoelectric sensor, or a laser displacement meter. In this form, when excessive light is incident on the radiation detector 1, the radiation detection device 10 stops the light-emitting unit by performing the same processing, thereby stopping the generation of light. In addition, the radiation detection device 10 may be configured to stop the operation of the radiation detector 1 when excessive light is incident on the radiation detector 1, as in any of Embodiments 1 to 6.

### <Embodiment 10>

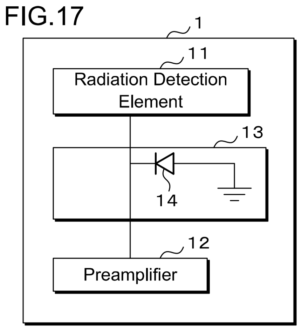

FIG. 17 is a block diagram showing the functional configuration of a radiation detector 1 according to Embodiment 10. The configuration of a radiation detection device 10 other than the radiation detector 1 is the same as that in any of Embodiments 1 to 9. The configuration of a reset unit 2 is the same as that in Embodiment 5, and the configuration of a signal processing unit 3 is the same as that in Embodiment 1.

In the radiation detector 1, an overvoltage protection circuit 13 is provided in the path of a signal input from the radiation detection element 11 to the preamplifier 12. The overvoltage protection circuit 13 is a circuit to prevent the potential of the input terminal of the preamplifier 12 from falling significantly below the ground potential. In the example shown in FIG. 17, the overvoltage protection circuit 13 is configured using a grounded diode 14. The overvoltage protection circuit 13 is configured such that a current flows through the diode 14 when the potential of the input terminal of the preamplifier 12 falls below the ground potential and the absolute value of the potential difference between the potential of the input terminal of the preamplifier 12 and the ground potential reaches a predetermined limit voltage. In this manner, the absolute value of the potential difference between the potential of the input terminal of the preamplifier 12 that has fallen below the ground potential and the ground potential is prevented from exceeding the limit voltage. The limit voltage is defined by the diode 14. The overvoltage protection circuit 13 is not limited to the form using the diode 14, but may be configured using elements other than the diode 14, such as a varistor.

Due to the overvoltage protection circuit 13, the preamplifier 12 is protected from overvoltage with respect to the ground potential. This prevents the potential of the input terminal of the preamplifier 12 from falling significantly below the ground potential to cause overvoltage. Damage to the preamplifier 12 is prevented, and damage to the radiation detector 1 is prevented.

The present invention is not limited to the content of the above-described embodiments, and various changes can be made within the scope of the claims. That is, embodiments obtained by combining technical means appropriately changed within the scope of the claims are also included in the technical scope of the present invention.

The features described inf the respective embodiments can be combined with each other. In addition, the independent claims and the dependent claims described in the claims can be combined with each other in all combinations, regardless of the citation form. In addition, although the form of multiple claims that cite two or more other claims (multi-claim form) is used in the scope of claims, the present invention is not limited thereto. A form of multi-claim (multi-multi claim) that cites at least one multi-claim may also be used.

### Reference Signs List

- 10: radiation detection device
- 1: radiation detector
- 11: radiation detection element
- 12: preamplifier
- 13: overvoltage protection circuit
- 2: reset unit
- 3: signal processing unit
- 35: stop processing unit
- 42: voltage application unit
- 43: power supply unit
- 51: irradiation unit
- 52: irradiation power unit
- 54: illumination unit (light-emitting unit)

## Claims

1. A radiation detection device, **characterized by** comprising:
a radiation detector that outputs a signal in response to incidence of radiation or light; and
a stop processing unit that determines whether or not excessive radiation or excessive light has been incident on the radiation detector based on the signal output from the radiation detector and stops an operation of the radiation detector or stops generation of radiation or light when it is determined that excessive radiation or excessive light has been incident on the radiation detector.

2. The radiation detection device according to claim 1, **characterized in that**
the stop processing unit determines that excessive radiation or excessive light has been incident on the radiation detector when a value of the signal output from the radiation detector exceeds a predetermined first threshold value or when a rate of increase in the value of the signal with respect to time exceeds a predetermined second threshold value.

3. The radiation detection device according to claim 2, **characterized in that**
the stop processing unit determines whether or not excessive radiation or excessive light has been incident on the radiation detector by comparing the value of the signal after A/D (analog/digital) conversion with the first threshold value or by comparing the rate of increase of the signal after A/D conversion with respect to time with the second threshold value.

4. The radiation detection device according to claim 2, **characterized in that**
the stop processing unit is an analog circuit, and
the stop processing unit determines whether or not excessive radiation or excessive light has been incident on the radiation detector by comparing the value of the signal with the first threshold value or by comparing the rate of increase of the signal with respect to time with the second threshold value.

5. A radiation detection device, **characterized by** comprising:
a radiation detector that outputs a signal in response to incidence of radiation or light; and
a stop processing unit that stops the operation of the radiation detector or stops the generation of radiation or light when a value of the signal output from the radiation detector exceeds a predetermined first threshold value or when a rate of increase in the value of the signal with respect to time exceeds a predetermined second threshold value.

6. The radiation detection device according to any one of claims 1 to 5, **characterized in that**
the radiation detector includes a radiation detection element that outputs a signal in response to incidence of radiation or light and a preamplifier that converts the signal output from the radiation detection element,
the radiation detection device further comprises a power supply unit that supplies power for operating the preamplifier to the preamplifier, and
the stop processing unit stops the operation of the radiation detector by causing the power supply unit to stop supplying power to the preamplifier.

7. The radiation detection device according to any one of claims 1 to 5, **characterized in that**
the radiation detector includes a radiation detection element,
the radiation detection device further comprises a voltage application unit that applies a voltage for operating the radiation detection element to the radiation detection element, and
the stop processing unit stops the operation of the radiation detector by causing the voltage application unit to stop applying a voltage to the radiation detection element.

8. The radiation detection device according to any one of claims 1 to 5, **characterized by** further comprising:
an irradiation unit that irradiates a sample with radiation,
wherein the radiation detector is arranged so as to detect radiation generated from the sample irradiated with radiation, and
the stop processing unit stops the generation of radiation by stopping an operation of the irradiation unit.

9. The radiation detection device according to any one of claims 1 to 5, **characterized by** further comprising:
a light-emitting unit,
wherein the stop processing unit stops the generation of light by stopping an operation of the light-emitting unit.

10. The radiation detection device according to any one of claims 1 to 5, **characterized in that**
the radiation detector includes:
a radiation detection element that outputs a signal in response to incidence of radiation or light;
a preamplifier that converts the signal output from the radiation detection element; and
an overvoltage protection circuit that prevents a potential of an input terminal of the preamplifier from falling below a ground potential and prevents an absolute value of a potential difference between the potential of the input terminal of the preamplifier and the ground potential from exceeding a predetermined limit voltage.

11. A signal processing method, **characterized by** comprising:
determining whether or not excessive radiation or excessive light has been incident on a radiation detector based on a signal output from the radiation detector in response to incidence of radiation or light; and
stopping an operation of the radiation detector or stopping generation of radiation or light when it is determined that excessive radiation or excessive light has been incident on the radiation detector.
